# EUROPÄISCHE PATENTSCHRIFT

(11) **EP 1 457 365 B1**
(45) Veröffentlichungstag und Bekanntmachung des Hinweises auf die Patenterteilung: **16.05.2007**
(21) Anmeldenummer: 04005728.3
(22) Anmeldetag: 10.03.2004
(51) Int. Cl.: B60H 1/00

(54) **Vorrichtung zur Erfassung der Temperatur im Innenraum eines Fahrzeuges**
Temperature detecting device in the passenger compartment of a vehicle
Dispositif de détection de la température dans l'habitacle d'un véhicule

(30) Priorität: 12.03.2003 DE 10311297; 31.10.2003 DE 10350915
(43) Veröffentlichungstag der Anmeldung: 15.09.2004
(73) Patentinhaber: Behr-Hella Thermocontrol GmbH, 70190 Stuttgart (DE)
(72) Erfinder: Trapp, Ralph, 33102 Paderborn (DE); Stich, Bernd, 33142 Büren (DE); Knittel, Otto, 59494 Soest (DE); Hamann, Marwin, 59555 Lippstadt (DE)
(74) Vertreter: Hilleringmann, Jochen

(56) Entgegenhaltungen:
- EP-A- 0 381 846
- DE-A1- 4 130 063
- DE-A1- 10 002 217
- DE-A1- 10 049 979

## Beschreibung

Die Erfindung betrifft eine Vorrichtung zur Erfassung der Temperatur im Innenraum eines Fahrzeuges, insbesondere für eine Klimaanlage eines Fahrzeuges.

Derzeitig wird im Rahmen der Kraftfahrzeugklimatisierung die Temperatur der Luft im Innenraum eines Fahrzeugs durch ein zwangsbelüftetes System, bestehen aus einem Belüftungsmotor und einem Temperatursensor, gemessen. Der Belüftungsmotor, der üblicherweise im Klimasteuergerät angebracht ist, saugt hierbei die Innenluft an und leitet sie durch einen Ansaugkanal zum Temperatursensor.

Der Temperatursensor ist thermisch von der Platine und anderen Komponenten der Steuergerätes isoliert, um Störeinflüsse zu vermeiden. Die Zwangskonvektion durch den Belüftungsmotor bewirkt, dass der Temperatursensor die Temperatur der einströmenden Luft aus dem Fahrzeuginneren erfasst. Dieses System ist mit einigen Nachteilen behaftet: Der Motor ist ein bewegliches Teil und somit verschließbehaftet, er erzeugt störende Geräusche und saugt Partikel aus dem Innenraum an, was dazu führen kann, dass der Sensor verschmutzt und u.U. der Ansaugkanal verstopft.

Aus DE 41 30 063 ist den Oberbegriff des Anspruchs 1 bekannt.

Aus DE-A-100 49 979 A1 ist eine Vorrichtung zur Innenraumtemperaturmessung in einem Fahrzeug ohne Einsatz eines Belüftungsmotors bekannt. Dort wird durch einen zusätzlichen Temperatursensor eine Kompensationsmessung durchgeführt. Der Kompensationstemperatursensor ist dabei relativ weit vom eigentlichen Innenraumtemperatursensor entfernt angeordnet.

Eine Aufgabe der Erfindung ist es, eine Vorrichtung zur Berechnung der Innenraumtemperatur ohne Zwangsbelüftung eines Sensors zu schaffen, bei der thermische Einflussgrößen effektiv kompensiert werden können.

Zur Lösung dieser Aufgabe wird mit der Erfindung eine Vorrichtung zur Erfassung der Temperatur im Innenraum eines Fahrzeuges, insbesondere für eine Klimaanlage eines Fahrzeuges vorgeschlagen, die versehen ist mit
- einem Innenraumtemperatursensor, der in einem Gehäuse angeordnet ist, das in oder an einer an den Innenraum des Fahrzeuges angrenzenden Wand angeordnet ist und zumindest teilweise an den Innenraum des Fahrzeuges angrenzt,
- einem Strahlungssensor, der zur Erwärmung des Gehäuses des Innenraumtemperatursensors führende Sonnenstrahlung erfasst, und
- einem Kompensationstemperatursensor, der hinter der Wand und von dem Innenraumtemperatursensor thermisch entkoppelt angeordnet ist und Wärme von Luft und/oder Baugruppen hinter der Wand erfasst, die zu einer Verfälschung des Messwertes des Innenraumtemperatursensors führt,
- wobei die beiden Temperatursensoren und der Strahlungssensor zu einer gemeinsamen Baugruppe zusammengefasst sind.

Bei der erfindungsgemäßen Vorrichtung zur Erfassung der Temperatur im Innenraum eines Fahrzeuges befindet sich ein Innenraumtemperatursensor derart vor, an oder in einer an den Innenraum des Fahrzeuges angrenzenden Wand, dass der Innenraumtemperatursensor in thermischem Kontakt mit der Luft im Innenraum des Fahrzeuges steht. Der Innenraumtemperatursensor selbst kann in einem Gehäuse angeordnet sein und ist insbesondere als NTCoder PTC-Bauelement in einem Vergussmaterial eingebettet. Hinter der Wand befindet sich ein Kompensationstemperatursensor, der thermisch vom Innenraumtemperatursensor entkoppelt ist und störende thermische Einflüsse erfasst, die hinter der Wand entstehen können. Dies kann beispielsweise durch die Eigenerwärmung von Bedieneinheiten oder Fahrzeugkomponenten wie insbesondere das Steuergerät einer Klimaanlage verursacht sein. Über einen Strahlungssensor werden durch die Sonneneinstrahlung direkt und indirekt erzeugte thermische Einflüsse erfasst, die sich auf das Messsignal des Innenraumtemperatursensors auswirken. Die beiden Temperatursensoren sind zu einer Baugruppe zusammengefasst, also beispielsweise auf einer gemeinsamen Platine oder einem anderen Träger bzw. einer Trägerplatte angeordnet.

Durch die Anordnung des Kompensationstemperatursensors vom Innenraumtemperatursensor entkoppelt und dennoch im Bereich des Innenraumtemperatursensors wird erreicht, dass sämtliche Temperatureinflüsse erfassbar sind, die sich auf das Innenraumtemperatursensor-Ausgangssignal auswirken und nicht durch die Temperatur der Luft im Innenraum des Fahrzeuges bedingt sind. Damit lässt sich das Ausgangssignal des Innenraumtemperatursensors wesentlich exakter kompensieren, was für eine exakte Innenraumtemperaturmessung und demzufolge eine genaue Regelung der Innenraumtemperatur von Vorteil ist. Darüber hinaus ist es möglich, die Kompensation der thermischen Einflussgrößen, wie sie auf den Innenraumtemperatursensor einwirken, Fahrzeugtyp unabhängig zu berücksichtigen, da sich nun die Kompensation einzig und allein anhand des Signals des Kompensationstemperatursensors bemisst. Andere Einflussgrößen können im Regelfall vernachlässigt werden. Wenn der Strahlungssensor möglichst nahe am Innenraumtemperatursensor angeordnet ist, so lassen sich auch die durch die Sonneneinstrahlung verursachten thermischen Einflüsse einzig und allein aus dem Signal des Strahlungssensors errechnen und berücksichtigen. Zweckmäßig ist es insbesondere, wenn der Strahlungssensor im Gehäuse des Innenraumtemperatursensors angeordnet ist.

In vorteilhafter Weiterbildung der Erfindung ist ferner vorgesehen, dass der Kompensationstemperatursensor thermisch mit mindestens einer Wärmeleitfläche verbunden ist, die hinter der Wand angeordnet ist. Diese Wärmeleitfläche ist vorzugsweise auf einer Trägerplatte, beispielsweise einer Platine angeordnet. Aufgabe der Wärmeleitfläche ist das "Einfangen" von Wärme und insbesondere Konvektionswärme, wie sie beispielsweise durch Luftbewegungen hinter der Wand entsteht. Vorzugsweise sind mehrere Wärmeleitflächen vorgesehen. Sofern diese Wärmeleitflächen auf beiden Flächen der Trägerplatte angeordnet sind, sind sie zweckmäßigerweise untereinander thermisch gekoppelt, was beispielsweise mittels Durchkontaktierungen erfolgt, wie sie vom Layout von Platinen her bekannt sind. Vorzugsweise befinden sich beidseitig des Kompensationstemperatursensors jeweils mindestens eine Wärmeleitfläche oder mindestens ein Paar auf beiden Flächen der Trägerplatte angeordneter Wärmeleitflächen.

Die thermische Entkopplung der beiden Temperatursensoren erfolgt vorzugsweise durch eine entsprechende Bedrahtung bzw. Anordnung von Leiterbahnen auf dem beide Temperatursensoren tragenden Träger. Werden beispielsweise die Leiterbahnen für die Energieversorgung beider Temperatursensoren mäanderförmig S-förmig oder auf andere Art und Weise wellenförmig ausgebildet, so tritt aufgrund der damit verbundenen Verlängerung der elektrischen Verbindungen eine thermische Entkopplung ein. Die thermische Entkopplung der gesamten Baugruppe über deren Zuleitungen kann ebenfalls auf die oben beschriebene Weise erfolgen. Zusätzlich bzw. alternativ kann man sich aber auch spezieller elektrischer Leitungen bedienen, die trotz guter elektrischer Leitfähigkeit thermisch schlecht leitend sind.

In vorteilhafter Weiterbildung der Erfindung ist ferner vorgesehen, dass die Anschlussbeinchen des Innenraumtemperatursensors und die Leiterbahnen auf der Trägerplatte sowie der Kompensationstemperatursensor von einer Vergussmasse umschlossen sind, die der thermischen Isolierung gegenüber der Umgebung und der mechanischen Fixierung dient.

Die Erfindung wird nachfolgend unter Bezugnahme auf die Zeichnung näher erläutert. Im einzelnen zeigen:
- Fig. 1: eine Seitenansicht eines Ausführungsbeispiels der erfindungsgemäßen Vorrichtung im in einem Klimaanlagen-Steuergerät eingebauten Zustand,
- Fig. 2: eine Ansicht auf die Baugruppe in Richtung des Pfeils II der Fig. 1 im nicht eingebauten Zustand und
- Fig. 3: eine Ansicht auf die Baugruppe in Richtung des Pfeils III der Fig. 1 im nicht eingebauten Zustand.

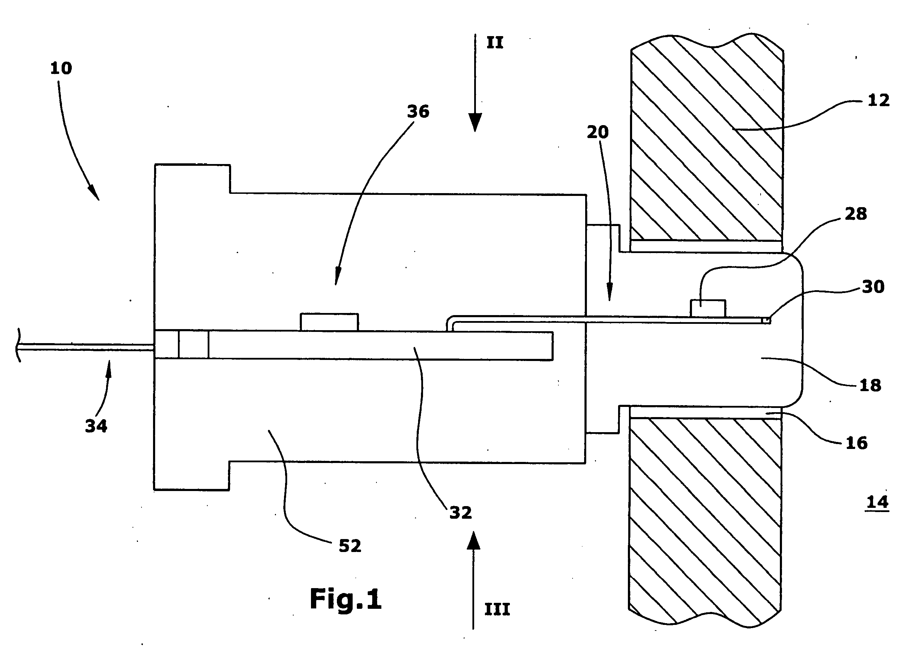

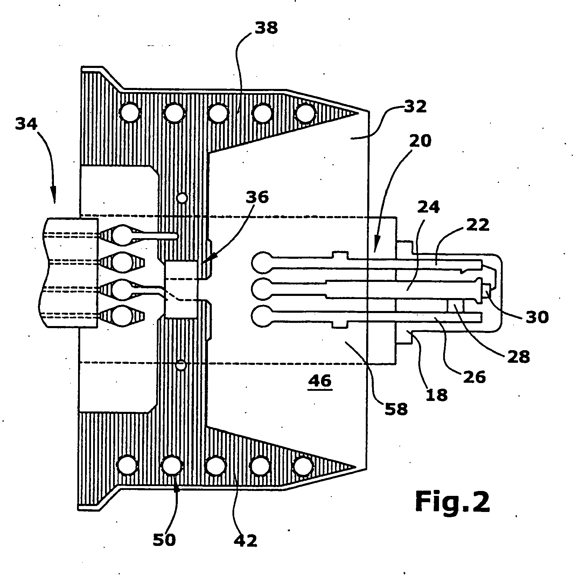

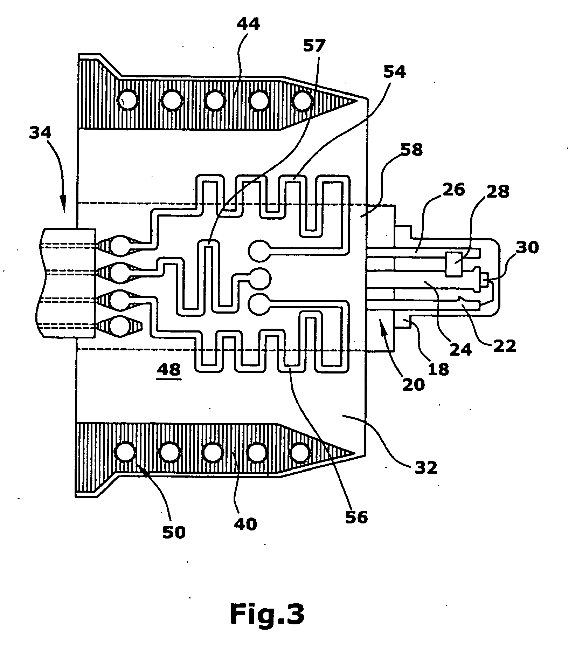

Fig. 1 zeigt ein bevorzugtes Ausführungsbeispiel einer erfindungsgemäßen Vorrichtung 10 zur Erfassung der Temperatur im Innenraum eines Fahrzeuges im eingebauten Zustand. Mit 12 ist eine an den Innenraum 14 angrenzende Wand dargestellt, bei der es sich beispielsweise um die Frontblende der Bedieneinheit einer Fahrzeug-Klimaanlage handelt. Die Wand 12 weist eine Öffnung 16 auf, in der ein Gehäuse 18 eines Bauteils der Vorrichtung 10 angeordnet ist. Das Gehäuse 18 beinhaltet einen Lead Frame 20 mit drei Anschlussbeinen 22,24,26, die der elektrischen Kontaktierung eines Innenraumtemperatursensors 28 und eines Strahlungssensors 30 dienen (siehe auch Fign. 2 und 3). Bei dem Innenraumtemperatursensor 28 handelt es sich in diesem Ausführungsbeispiel um ein NTC-Widerstandselement, während der Strahlungssensor 30 als Fotodiode ausgebildet ist.

Wie in den Fign. zu erkennen ist, ist der Lead Frame 20 auf einer Platine 32 verlötet, zu der eine mehradrige elektrische Zuleitung 34 führt. Auf der Platine 32 befindet sich ein Kompensationstemperatursensor 36, der elektrisch mit der Zuleitung 34 und thermisch mit mehreren Wärmeleitflächen 38,40 und 42,44 verbunden ist. Diese Wärmeleitflächen erstrecken sich beidseitig des Kompensationstemperatursensors 36, wobei jeweils zwei der Wärmeleitflächen auf der oberen Hauptfläche 46 der Platine 32 und die anderen beiden Wärmeleitflächen auf der unteren Hauptfläche 48 der Platine 32 angeordnet sind. Untereinander sind die Wärmeleitflächen 38 und 40 sowie 42 und 44 jeweils paarweise verbunden, was durch Durchkontaktierungen 50 erfolgt, bei denen es sich um metallisierte Durchgangsöffnungen handelt, die durch die Platine 32 hindurch verlaufen und die Wärmeleitflächen jedes Wärmeleitflächenpaares untereinander thermisch verbinden.

Wie ferner insbesondere anhand von Fig. 3 zu erkennen ist, sind die Leiterbahnen 52,54,56 auf der Platine 32 durch eine in diesem Fall wellenförmige Ausbildung verlängert, so dass eine thermische Entkopplung der beiden Temperatursensoren untereinander und mit der elektrischen Zuleitung 34 erzielt wird. Die Platine 32 und der Lead Frame 20 sind von einer Vergussmasse 58 umschlossen, was bezüglich der Platine 32 lediglich teilweise, nämlich im mittleren Teil zwischen den Wärmeleitflächenpaaren, gegeben ist.

Die erfindungsgemäße Vorrichtung erlaubt die Messung der Innentemperatur ohne die obengenannten Nachteile. Die Vorrichtung weist drei Sensoren auf, die in einer festen geometrischen und thermischen Beziehung zueinander stehen, nämlich den Innenraumtemperatursensor, der in das Fahrzeuginnere ragt und die Temperatur der Luft misst, den Strahlungssensor, der die einfallende Strahlungsintensität misst, welche auf den Innenraumtemperatursensor trifft, und den Kompensationstemperatursensor, der die thermische Energie erfasst, welche den Innenraumtemperatursensor über die Befestigung oder das Gehäuse beeinflusst. Der Messwert des Innenraumtemperatursensors wird durch Wärmeeintrag vom Steuergerät und/oder durch das Gehäuse verfälscht. Ebenso hat direkte Sonneneinstrahlung, die den ersten Temperatursensor trifft, einen störenden Einfluss. Diese Störeinflüsse werden aber durch die zusätzlichen Sensoren erfasst und können somit rechnerisch kompensiert werden. Dies geschieht üblicherweise im Klimasteuergerät.

Die Besonderheit der erfindungsgemäßen Vorrichtung besteht in der Anordnung und thermischen Ankopplung der drei Sensoren. Die beiden Temperatursensoren sind voneinander thermisch entkoppelt. Ihre Anschlusskontakte und - leitungen sind thermisch von der Beschaltung der Temperatursensoren ebenfalls thermisch entkoppelt. Über Wärmeleitflächen, mit denen der Kompensationssensor in thermischem Kontakt steht, wird die Umgebungswärme des Kompensationstemperatursensors "eingefangen". Die Anschlussbeinchen und Leiterbahnen, welche zu den drei Sensoren führen, sind in einer Vergussmasse eingebettet; dies gilt auch für den Kompensationstemperatursensor, nicht jedoch für die Wärmeleitflächen. Die die drei Sensoren aufweisende Baugruppe kann außerhalb der Bedieneinheit der Klimaanlage angeordnet sein.

### BEZUGSZEICHENLISTE

- 10: Vorrichtung
- 12: Wand zum Fahrzeuginnenraum
- 14: Innenraum
- 16: Öffnung
- 18: Gehäuse
- 20: Frame
- 22: Anschlussbeinen
- 24: Anschlussbeinen
- 26: Anschlussbeinen
- 28: Innenraumtemperatursensor
- 30: Strahlungssensor
- 32: Platine
- 34: mehradrige elektrische Zuleitung
- 36: Kompensationstemperatursensor
- 38: Wärmeleitflächen
- 40: Wärmeleitflächen
- 42: Wärmeleitflächen
- 44: Wärmeleitflächen
- 46: oberen Hauptfläche
- 48: Hauptfläche
- 50: Durchkontaktierungen
- 52: Vergussmasse
- 58: Vergussmasse

## Patentansprüche

1. Vorrichtung zur Erfassung der Temperatur im Innenraum eines Fahrzeuges, insbesondere für eine Klimaanlage eines Fahrzeuges, mit
- einem Innenraumtemperatursensor (28), der in einem Gehäuse (18) angeordnet ist, das in oder an einer an den Innenraum (14) des Fahrzeuges angrenzenden Wand (12) angeordnet ist und zumindest teilweise an den Innenraum (14) des Fahrzeuges angrenzt,
- einem Kompensationstemperatursensor (36), der hinter der Wand (12) und von dem Innenraumtemperatursensor (28) thermisch entkoppelt angeordnet ist und Wärme von Luft und/oder Baugruppen hinter der Wand (12) erfasst, die zu einer Verfälschung des Messwertes des Innenraumtemperatursensors (28) führt,
**dadurch gekennzeichnet, dass**
- einem Strahlungssensor (30), der zur Erwärmung des Gehäuses (18) des Innenraumtemperatursensors (28) führende Sonnenstrahlung erfasst, und
- wobei die beiden Temperatursensoren (28,36) und der Strahlungssensor (30) zu einer gemeinsamen Baugruppe zusammengefasst sind.

2. Vorrichtung nach Anspruch 1, **dadurch gekennzeichnet, dass** die beiden Temperatursensoren (28,36) und der Strahlungssensor (30) von einer gemeinsamen Trägerplatte (32) gehalten sind.

3. Vorrichtung nach Anspruch 1 oder 2, **dadurch gekennzeichnet, dass** der Kompensationstemperatursensor (36) thermisch mit mindestens einer hinter der Wand (12) angeordneten Wärmeleitfläche (38,40,42,44) verbunden ist.

4. Vorrichtung nach Anspruch 2 und 3, **dadurch gekennzeichnet, dass** Wärmeleitflächen (38,40,42,44) auf mindestens einer Fläche (46,48) der Trägerplatte (32) beidseitig des Kompensationstemperatursensors (36) angeordnet sind.

5. Vorrichtung nach Anspruch 4, **dadurch gekennzeichnet, dass** Wärmeleitflächen (38,40,42,44) auf beiden Flächen (46,48) der Trägerplatte (32) beidseitig des Kompensationstemperatursensors (36) angeordnet sind, wobei die auf den beiden Flächen (46,48) der Trägerplatte (32) jeweils gegenüberliegenden Wärmeleitflächen (38,40,42,44) mittels sich durch die Trägerplatte (32) hindurch erstreckenden Durchkontaktierungen (50) thermisch untereinander verbunden sind.

6. Vorrichtung nach einem der Ansprüche 1 bis 5, **dadurch gekennzeichnet, dass** die elektrische Anbindung des Innenraumtemperatursensors (28) und/oder des Strahiungssensors (30) thermisch entkoppelt ist/sind.

7. Vorrichtung nach einem der Ansprüche 1 bis 6, **dadurch gekennzeichnet, dass** das Gehäuse (18) des Innenraumtemperatursensors (28) elektrische Anschlussbeinchen (20,22,24,26) und die Baugruppe elektrische Leiterbahnen aufweist und dass die Anschlussbeinchen (20,22,24,26) und die Leiterbahnen (52,54,56) zur thermischen Isolation und zur mechanischen Fixierung mindestens teilweise von einer Vergussmasse (52) eingeschlossen sind.

8. Vorrichtung nach einem der Ansprüche 1 bis 7, **dadurch gekennzeichnet, dass** die Baugruppe außerhalb eines Bedien- und/oder Steuergeräts einer Fahrzeug-Klimaanlage angeordnet ist.

## Claims

1. Device for detection of the temperature in the interior of a vehicle, particularly for an air-conditioning system of a vehicle, comprising
- an interior temperature sensor (28) arranged in a housing (18) arranged in or at a wall (12) adjacent to the interior (14) of the vehicle and being at least partially adjacent to the interior (14) of the vehicle,
- a compensation temperature sensor (36) arranged behind the wall (12) and such that it is thermally decoupled from the interior temperature sensor (28) and detecting the heat of air and/or assemblies behind the wall (12) which leads to a falsification of the measured value of the interior temperature sensor (28),
**characterized in that**
- a radiation sensor (30) detects solar radiation leading to the heating of the housing (18) of the interior temperature sensor (28), and
- the two temperature sensors (28,36) and the radiation sensor (30) being combined in a common assembly.

2. Device according to claim 1, **characterized in that** the two temperature sensors (28,36) and the radiation sensor (30) are held by a common mounting plate (32).

3. Device according to claim 1 or 2, **characterized in that** the compensation temperature sensor (36) is thermally connected with at least one heat conducting surface (38,40,42,44) arranged behind the wall (12).

4. Device according to claim 2 and 3, **characterized in that** heat-conducting surfaces (38,40,42,44) are arranged on at least one surface (46,48) of the mounting plate (32) at both sides of the compensation temperature sensor (36).

5. Device according to claim 4, **characterized in that** heat-conducting surfaces (38,40,42,44) are arranged on both surfaces (46,48) of the mounting plate (32) at both sides of the compensation temperature sensor (36), the heat-conducting surfaces (38,40,42,44) respectively opposite on the two surfaces (46,48) of the mounting plate (32) being thermally connected with each other by means of throughplatings (50) extending through the mounting plate (32).

6. Device according to one of claims 1 to 5, **characterized in that** the electric connection of the interior temperature sensor (28) and/or the radiation sensor (30) is/are thermally decoupled.

7. Device according to one of claims 1 to 6, **characterized in that** the housing (18) of the interior temperature sensor (28) comprises electric pins (20,22,24,26) and the assembly comprises electric conducting tracks, and that the pins (20,22,24,26) and the conducting tracks (52,54,56) are embedded, at least partially, by a casting mass (52) for the purpose of thermal insulation and mechanical fixing.

8. Device according to one of claims 1 to 7, **characterized in that** the assembly is arranged outside an operating and/or controlling apparatus of a vehicle air-conditioning system.

## Revendications

1. Dispositif pour détecter la température au sein de l'espace intérieur d'un véhicule, destiné en particulier à une installation de climatisation d'un véhicule, comprenant
- un capteur de température d'espace intérieur (28), qui est disposé dans un boîtier (18), lequel est disposé dans ou sur une paroi (12) contiguë à l'espace intérieur (14) du véhicule et est contigu, au moins en partie, à l'espace intérieur (14) du véhicule,
- un capteur de température de compensation (36), qui est disposé derrière la paroi (12) et en découplage thermique vis-à-vis du capteur de température d'espace intérieur (28) et qui détecte la chaleur de l'air et/ou de blocs structurels situés derrière la paroi (12), laquelle a pour effet de fausser la valeur de mesure du capteur de température d'espace intérieur (28),
**caractérisé par**
- un capteur de rayonnement (30), qui détecte le rayonnement solaire provoquant l'échauffement du boîtier (18) du capteur de température d'espace intérieur (28), et
- dans lequel les deux capteurs de température (28, 36) et le capteur de rayonnement (30) sont réunis en un bloc structurel commun.

2. Dispositif selon la revendication 1, **caractérisé en ce que** les deux capteurs de température (28, 36) et le capteur de rayonnement (30) sont portés par une plaque de support (32) commune.

3. Dispositif selon la revendication 1 ou 2, **caractérisé en ce que** le capteur de température de compensation (36) est relié thermiquement à au moins une surface thermoconductrice (38, 40, 42, 44) disposée derrière la paroi (12).

4. Dispositif selon la revendication 2 et 3, **caractérisé en ce que** des surfaces thermoconductrices (38, 40, 42, 44) sont disposées sur au moins une surface (46, 48) de la plaque de support (32), de part et d'autre du capteur de température de compensation (36).

5. Dispositif selon la revendication 4, **caractérisé en ce que** des surfaces thermoconductrices (38, 40, 42, 44) sont disposées sur les deux surfaces (46, 48) de la plaque de support (32), de part et d'autre du capteur de température de compensation (36), les surfaces thermoconductrices (38, 40, 42, 44), respectivement situées dans des positions opposées sur les deux surfaces (46, 48) de la plaque de support (32), étant alors reliées thermiquement entre elles au moyen de contacts traversants (50) s'étendant à travers la plaque de support (32).

6. Dispositif selon l'une des revendications 1 à 5, **caractérisé en ce que** la liaison électrique du capteur de température d'espace intérieur (28) et/ou celle du capteur de rayonnement (30) est/sont découplée(s) thermiquement.

7. Dispositif selon l'une des revendications 1 à 6, **caractérisé en ce que** le boîtier (18) du capteur de température d'espace intérieur (28) présente de petites pattes de connexion électriques (20, 22, 24, 26) et le bloc structurel, des bandes conductrices électriques, et **en ce que** les petites pattes de connexion (20, 22, 24, 26) et les bandes conductrices (52, 54, 56) sont entourées, au moins partiellement, par une masse de scellement (52), en vue de l'isolation thermique et de la fixation mécanique.

8. Dispositif selon l'une des revendications 1 à 7, **caractérisé en ce que** le bloc structurel est disposé à l'extérieur d'un appareil de maniement et/ou d'un appareil de commande d'une installation de climatisation de véhicule.
